# EUROPEAN PATENT SPECIFICATION

(11) **EP 2 264 959 B1**
(45) Date of publication and mention of the grant of the patent: **25.07.2012**
(21) Application number: 09726792.6
(22) Date of filing: 24.03.2009
(51) Int. Cl.: H04L 12/66, H04L 12/24, H04L 29/06

(54) **MEDIA GATEWAY, MEDIA GATEWAY CONTROLLER, METHOD AND SYSTEM FOR COMMUNICATION OF MULTIMEDIA PHONES**
MEDIENGATEWAY, MEDIENGATEWAYKONTROLLE, VERFAHREN UND SYSTEM FÜR KOMMUNIKATION VON MULTIMEDIATELEFONEN
PASSERELLE MULTIMÉDIA, CONTRÔLEUR DE PASSERELLE MULTIMÉDIA, PROCÉDÉ ET SYSTÈME DE COMMUNICATION DE TÉLÉPHONES MULTIMÉDIAS

(30) Priority: 31.03.2008 CN 200810090253; 28.09.2008 CN 200810168488
(43) Date of publication of application: 22.12.2010
(73) Proprietor: Huawei Technologies Co., Ltd., Longgang District, Shenzhen Guangdong 518129 (CN)
(72) Inventor: XU, Zhiyong, Shenzhen (CN); TANG, Tingfang, Shenzhen (CN)
(74) Representative: Isarpatent
(86) International application number: PCT/CN2009/070962
(87) International publication number: WO 2009/121272

(56) References cited:
- WO-A1-2008/015590
- CN-A- 101 036 346
- US-A1- 2005 058 125
- HUAWEI: "Use-cases and Requirements for Enhancement of Interworking between MTSI and Circuit Switched networks", 3GPP DRAFT; C3-081029, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG4, no. Philadelphia; 20080701, 1 July 2008 (2008-07-01), XP050290061, [retrieved on 2008-07-01]

## Description

### FIELD OF THE INVENTION

The present invention relates to communications technologies, and in particular, to a Media Gateway (MGW), a Media Gateway Control Function (MGCF), and a multimedia telephone interworking method and system.

### BACKGROUND OF THE INVENTION

Currently, in the interworking between a Multimedia Telephony Service over IMS (MTSI, where IMS is an acronym of IP Multimedia Subsystem) terminal and a Circuit Switched (CS)H.324 multimedia telephone terminal in the 3^{rd} Generation Partnership Project (3GPP), information is generally exchanged through a gateway system.

In the process of interworking between the MTSI terminal and the CS H.324 multimedia telephone terminal, the MTSI terminal is vulnerable to quality problems such as buffer overflow caused by instability of a sent packet. After discovering such a problem, the gateway system discards the packet, and sends a Resource Record (RR) message to the MTSI terminal by means of Real-time Transport Control Protocol (RTCP), notifying the MTSI terminal that the packet is lost; or the gateway system improves the quality of the multimedia telephone by renegotiating the codes.

However, the following drawbacks in the prior art have become apparent:

The quality problem detected on the MTSI terminal is not solvable unless the gateway system discards the packet, the MTSI terminal is unable to send the specific quality information to the gateway system, and the gateway system is unable to perform adjustment or adaptation to overcome the quality problem in the multimedia interworking dynamically according to the received quality information, which goes against improving the communication quality in the multimedia telephone interworking.

The document (WO 2008/015590 A1) discloses an interworking control mechanism for a communication connection between at least two parties located in different networks. The interworking control mechanism provides the following functions: a parameter may be added in a signaling towards one party, which interprets the parameter and shows/indicates a message to the user that a media composition change is not possible and thus prevented even if it would be instructed; otherwise, an announcement is sent from the network to the other party being incapable to execute the media composition change to inform the user about the dropping of a media stream; and a negotiation between the network and the terminal device of the party being incapable to execute the media composition change is initiated in order to modify the remaining session streams, such as to rearrange the available bandwidth and possibly to change a codec to a better one.

### SUMMARY OF THE INVENTION

One aspect of the present invention is to provide a multimedia telephone interworking method which improves communication quality in multimedia telephone interworking.

The multimedia telephone interworking method is based on the following technical solution:

A multimedia telephone interworking method applied in a scenario of interworking between MTSI and CS multimedia telephony service includes:
by an MGW, receiving quality information sent from an MTSI terminal; and
adjusting communication quality dynamically according to the quality information;
wherein the quality information comprises at least one of the following: Temporary Maximum Media Bandwidth Request, TMMBR, request for balancing frame rate and image resolution, packet loss ratio, or buffer information.

By using the multimedia telephone interworking method under the present invention, the MGW can receive the quality information sent from the MTSI terminal anytime in the multimedia telephone interworking process, and take actions according to the quality information to adjust the communication quality dynamically. In contrast to the prior art, the quality information occurring or detected on the MTSI terminal can be sent to the MGW in time, and the MGW adjust the communication quality dynamically according to the quality information. In this way, the communication quality in the multimedia telephone interworking is improved.

Another aspect of the present invention is to provide an MGW that is capable of improving communication quality in multimedia telephone interworking.

The MGW is based on the following technical solution:

An MGW includes:
a receiving unit, configured to receive quality information sent from an MTSI terminal; and
an adjusting unit, configured to adjust communication quality dynamically according to the quality information;
wherein the quality information comprises at least one of the following: Temporary Maximum Media Bandwidth Request, TMMBR, request for balancing frame rate and image resolution, packet loss ratio, or buffer information.

Through the MGW disclosed herein, the receiving unit can receive quality information sent from the MTSI terminal anytime and take actions according to the quality information, and the adjusting unit adjusts the communication quality dynamically according to the quality information. In contrast to the prior art, the quality information occurring or detected on the MTSI terminal can be sent to the adjusting unit in time, and the adjusting unit adjusts the communication quality dynamically according to the quality information. In this way, the communication quality in the multimedia telephone interworking is improved.

A third aspect of the present invention is to provide a multimedia telephone interworking system that is capable of communication quality in multimedia telephone interworking.

The multimedia telephone interworking system is based on the following technical solution:

A multimedia telephone interworking system includes:
an MGW, configured to: receive quality information sent from an MTSI terminal, and adjust communication quality dynamically according to the quality information; and
an MGCF, configured to: receive the quality information reported by the MGW, and send the quality information to a CS multimedia telephone terminal for dynamic adjustment;
wherein the quality information comprises at least one of the following: Temporary Maximum Media Bandwidth Request, TMMBR, request for balancing frame rate and image resolution, packet loss ratio, or buffer information.

Through the multimedia telephone interworking system under the present invention, the MGW can receive the quality information sent from the MTSI terminal any time, and take actions according to the quality information to adjust the communication quality dynamically; or the quality information is reported to the MGCF, and the MGCF sends the quality information to the CS multimedia telephone terminal for the purpose of dynamic adjustment. In contrast to the prior art, the quality information occurring or detected on the MTSI terminal can be sent to the MGW in time, and the MGW adjust the communication quality dynamically according to the quality information. In this way, the communication quality in the multimedia telephone interworking is improved.

### BRIEF DESCRIPTION OF THE DRAWINGS

FIG. 1 is a flowchart of a multimedia telephone interworking method provided in an embodiment of the present invention;
FIG. 2 is a flowchart of a multimedia telephone interworking method in scenario 1 in Embodiment I under the present invention;
FIG. 3 is a flowchart of a multimedia telephone interworking method in scenario 2 in Embodiment 1 under the present invention;
FIG. 4 is a flowchart of a multimedia telephone interworking method provided in Embodiment 2 of the present invention;
FIG. 5 is a flowchart of a multimedia telephone interworking method provided in Embodiment 3 of the present invention;
FIG. 6 is a flowchart of a multimedia telephone interworking method provided in Embodiment 4 of the present invention;
FIG. 7 shows a structure of an MGW in an embodiment of the present invention;
FIG. 8 shows a structure of an MGCF in an embodiment of the present invention; and
FIG. 9 shows a structure of a multimedia telephone interworking system provided in an embodiment of the present invention.

### DETAILED DESCRIPTION OF THE EMBODIMENTS

The embodiments of the present invention provide an MGW, an MGCF, and a multimedia telephone interworking method and system in order to improve communication quality in interworking between MTSI and CS multimedia telephony service.

The present invention is elaborated below with reference to the accompanying drawings and exemplary embodiments.

A multimedia telephone interworking method is provided in an embodiment of the present invention to improve communication quality in the interworking between MTSI and CS multimedia telephony service.

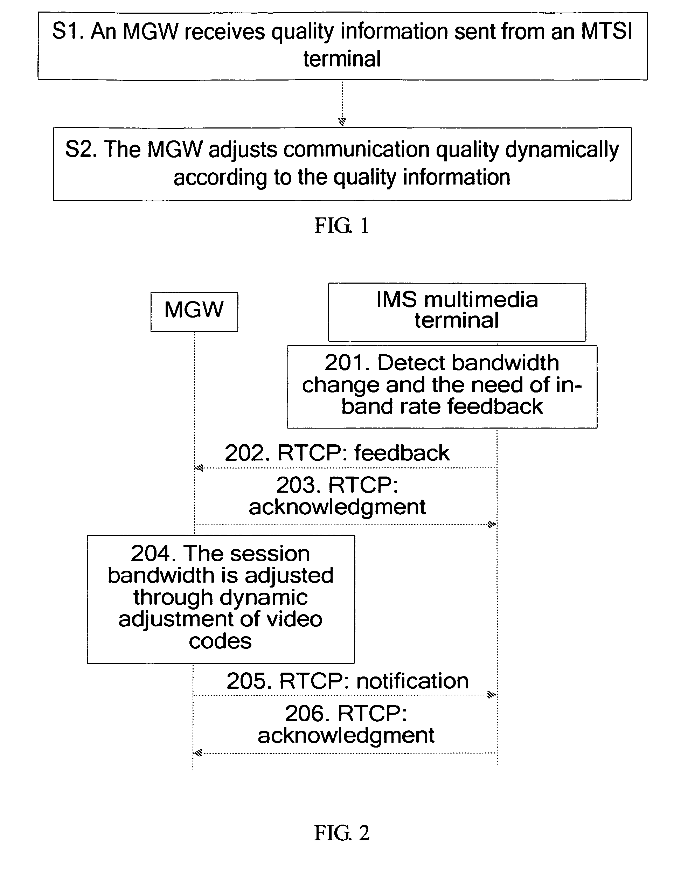

As shown in FIG. 1, in the scenario of interworking between the MTSI and the CS multimedia telephony service, the method includes:
S1. An MGW receives quality information sent from an MTSI terminal; and
S2. The MGW adjusts communication quality dynamically according to the quality information.

By using the multimedia telephone interworking method under the present invention, the MGW can receive the quality information sent from the MTSI terminal anytime in the multimedia telephone interworking process, and take actions according to the quality information to adjust the communication quality dynamically. In contrast to the prior art, the quality information occurring or detected on the MTSI terminal can be sent to the MGW in time, and the MGW adjust the communication quality dynamically according to the quality information. In this way, the communication quality in the multimedia telephone interworking is improved.

The MGW and the MGCF are two key components of the next-generation network. The MGW provides media resources and bearer resources, and the MGCF is responsible for the call control function.

In the case of interworking between the MTSI terminal and the CS H.324 multimedia telephone terminal, the quality information detected by the MTSI terminal is maximum requested bandwidth, frame rate level parameter, packet loss rate, or buffer information, or any combination thereof.

The following describes the embodiments of the present invention in more detail corresponding to the foregoing scenario in order to expound the multimedia interworking method under the present invention.

### Embodiment 1

In the interworking of an established multimedia telephony service, when an MTSI terminal moves to an area where mobile users are densely distributed, because wireless resources are stringently required, the bandwidth allocated to an individual user decreases. In this case, the MTSI terminal detects the decrease of the network bandwidth, and returns a Temporary Maximum Media Bandwidth Request (TMMBR) to the MGW through RTCP, requesting the MGW to decrease bandwidth. After receiving the TMMBR, the MGW judges whether a video transcoder is inserted into the session, and whether the video can be adjusted to the required bandwidth.

Scenario 1: If a video transcoder exists in the session and the video can be adjusted to the required bandwidth, the MGW can process the video itself, and adjust the transmitting rate of the video. As shown in FIG. 2, the detailed steps are as follows:
201: The MTSI terminal detects change of bandwidth and the need of in-band rate feedback.
202-203: The MTSI terminal sends quality information to the MGW by sending an RTCP TMMBR request that carries the maximum bandwidth information.
204: The MGW adjusts the bandwidth of the video stream to the value requested by the MTSI terminal through the video transcoder.
205-206: The MGW sends an acknowledgement to the MTSI terminal, indicating that the bandwidth is adjusted as requested.

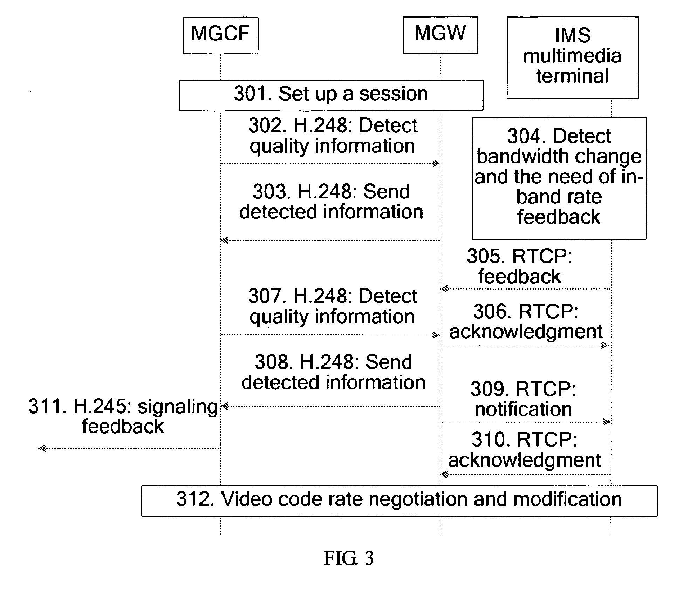

Scenario 2: If no video transcoder is applied or inserted in the session, or the MGW sends the maximum bandwidth information to the MGCF through an H.248 message, the MGCF returns the maximum bandwidth information to the CS H.324 multimedia telephone terminal through H.245, and the CS H.324 multimedia telephone terminal adjusts the video code rate dynamically according to the maximum bandwidth. As shown in FIG. 3, the detailed steps are as follows:
301-303: The MGW sets up a session with the MGCF, and MGCF instructs the MGW to detect the bandwidth quality information sent through RTCP.
304-306: When detecting the bandwidth instruction, the MTSI terminal sends bandwidth quality information by sending an RTCP TMMBR request, where the quality information carries the maximum bandwidth information.
307-308: The MGW reports the quality information sent by the MTSI terminal to the MGCF through H.248, where the quality information includes the maximum bandwidth information.
309-310: The MGW sends a maximum bandwidth acknowledgement to the MTSI terminal.
311-312: According to the bandwidth information included in the information sent through RTCP, the MGCF sends the bandwidth information to the CS H.324 multimedia telephone terminal through an H.245 flow control command, and the CS H.324 multimedia telephone terminal adjusts the video code rate dynamically according to the maximum bandwidth.

The H.248 protocol is defined by International Telecommunications Union - Telecommunications Standardization Sector Study Group 16 (ITU-T SG16) for media resource control, and can be used for controlling media processing devices such as an MGW and MGCF.

The basic principles of the H.248 protocol are to abstract various resources on the media processing device into a network, and the network is categorized into physical network and ephemeral network. A physical network represents some physical entities of semi-permanent existence, for example, Time Division Multiplex (TDM) timeslots; and an ephemeral network represents public resources released after the resources are requested for temporary use, for example, Real-Time Transport Protocol (RTP) streams. The combination of networks is abstracted into a context, and topology is descriptive of relationships between networks. Based on such abstraction, call connection is actually an operation for the network and the context, and is performed through command requests and responses exchanged between the media control device and the media processing device. Commands include: add, modify, delete, and notify; and command parameters are called "descriptors", which are categorized into Property, Signal, Event, and Statistic. The parameters which are of service dependence are logically aggregated into a package. Packages are means of extending protocol functions in the H.248 protocol.

The H.248 protocol extends the protocol functions through packages, and adds a new function only by defining a new package without modifying the protocol itself. A package is encapsulation of an independent feature. When a media processing device declares support of the package, the media processing device supports this feature, and the media control device can use the property, event, signal, and statistic defined in the package to operate media resources on the media processing device and implement the corresponding service logics.

### Embodiment 2

Generally, when the bandwidth is constant, high frame rate and low picture quality are applied to the violently motional pictures of videos to ensure quality of multimedia interworking; and low frame rate and high picture quality are applied to the videos whose contents are almost static in order to ensure quality of multimedia interworking. Low quality of videos is generally caused by discord between the frame rate and the picture quality. If the video quality is low, the MGW judges whether a video transcoder is already included or inserted in the session with the MTSI terminal, and judges whether the video codes can be adjusted to the requested frame rate and image resolution.

If a video transcoder is already inserted into the session, and the video codes can be adjusted to the requested frame rate and image resolution, the MGW coordinates and balances the frame rate and the image resolution. More detailed steps are: First, the MTSI terminal sends an RTCP TMMBR request to the MGW, requesting balancing of the frame rate and the image resolution, where the request carries a frame rate level parameter; the MGW adjusts the frame rate and the image resolution to the balance point requested by the MTSI terminal through a video transcoder; and the MGW notifies the MTSI terminal that the frame rate and the image resolution are adjusted to the requested balance point.

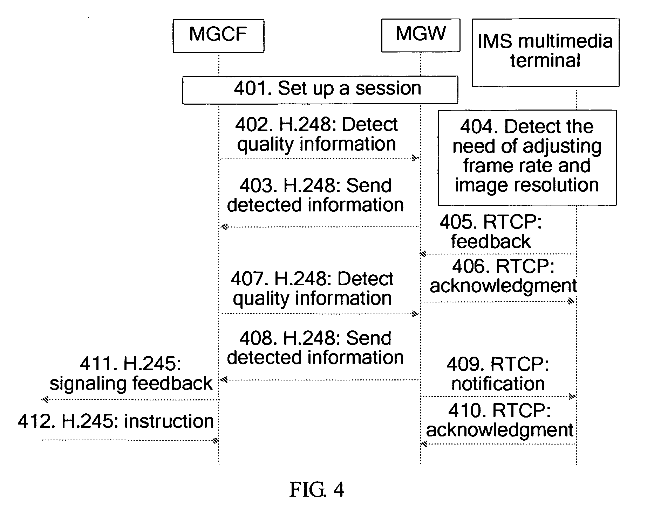

If no video transcoder is applied in the session, or a video transcoder is applied but the video transcoder is unable to adjust the video codes to the requested frame rate and image resolution, the MGW submits the request for balancing the frame rate and the image resolution to the MGCF, and the MGCF forwards the request to the CS H.324 multimedia telephone terminal. The CS H.324 multimedia telephone terminal balances the frame rate and the image resolution. As shown in FIG. 4, the detailed steps are as follows:
401-403: The MGW sets up a session with the MGCF, and MGCF instructs the MGW to detect the frame rate and image resolution quality information sent through RTCP.
404-406: When detecting the frame rate and image resolution information instruction, the MTSI terminal sends frame rate and image resolution quality information by sending an RTCP TMMBR request, where the quality information carries the frame rate level parameter.
407-408: The MGW reports the quality information sent by the MTSI terminal to the MGCF through H.248, where the quality information includes the frame rate level parameter.
409-410: The MGW sends a frame rate level acknowledgement to the MTSI terminal.
411-412: According to the frame rate level information included in the information reported by the MGW, the MGCF sends the frame rate level information to the CS H.324 multimedia telephone terminal through an H.245 flow control command, and the CS H.324 multimedia telephone terminal adjusts the frame rate and the image resolution dynamically according to the frame rate level.

### Embodiment 3

When detecting that the packet loss ratio exceeds an upper threshold, the MTSI terminal sends the detected quality information to the MGW. After receiving the quality information, the MGW judges whether the communication quality can be adjusted according to the packet loss ratio.

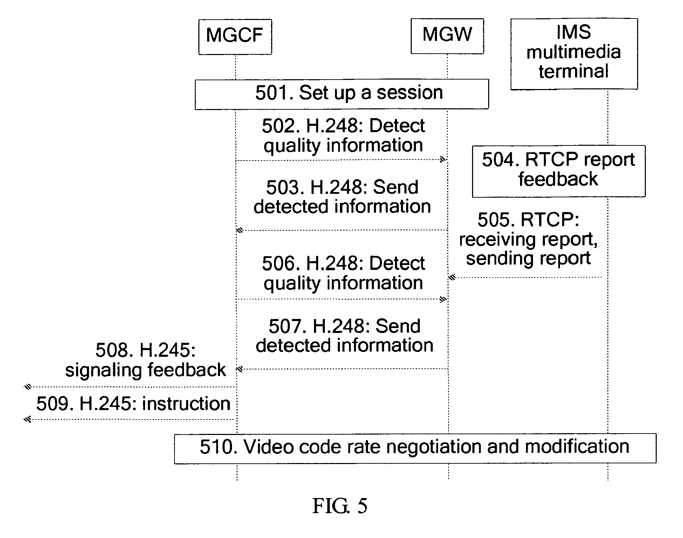

If the communication quality can be adjusted according to the packet loss ratio, the MGW processes the video by itself, converts the packet loss ratio into bandwidth information, and modifies the video code rate according to the bandwidth information. If the communication quality cannot be adjusted according to the packet loss ratio, the MGW converts the packet loss ratio into bandwidth information and reports the bandwidth information to the MGCF through an H.248 message, and the MGCF returns the maximum bandwidth information to the CS H.324 multimedia telephone terminal through H.245, and the CS H.324 multimedia telephone terminal modifies the video code rate according to the bandwidth information. As shown in FIG. 5, the detailed steps are as follows:
501-503: The MGW sets up a session with the MGCF, and the MGCF instructs the MGW to detect the packet loss threshold quality information sent through RTCP. In the instruction of detecting the packet loss event, the threshold reported through the packet loss event may be carried in an event package, or obtained through configuration.
504-505: The MTSI terminal sends the RTCP reports to the MGW periodically, and the MGW obtains the packet loss ratio of the terminal. The RTCP reports include Receiving Report (RR), and Sending Report (SR).
506-507: The MGW compares the packet loss ratio reported through RTCP with the threshold of reporting the packet loss event, and decides whether to report a quality event; and reports the recommended bandwidth value to the MGCF through H.248 according to the packet loss ratio. For example, the current session bandwidth is 50 Kbps. If the packet loss ratio reaches 20%, the recommended bandwidth value is 40 Kbps.
508-509: The MGCF sends an H.245 command to the CS H.324 multimedia telephone terminal, instructing the CS H.324 multimedia telephone terminal to modify the video code rate.
510: The CS H.324 multimedia telephone terminal modifies the video code rate in the interworking process.

### Embodiment 4

When detecting the buffer information, the MTSI terminal may fmd that the buffer is lower than the lower threshold or higher than the upper threshold.

In this case, the MTSI terminal sends the quality information to the MGW

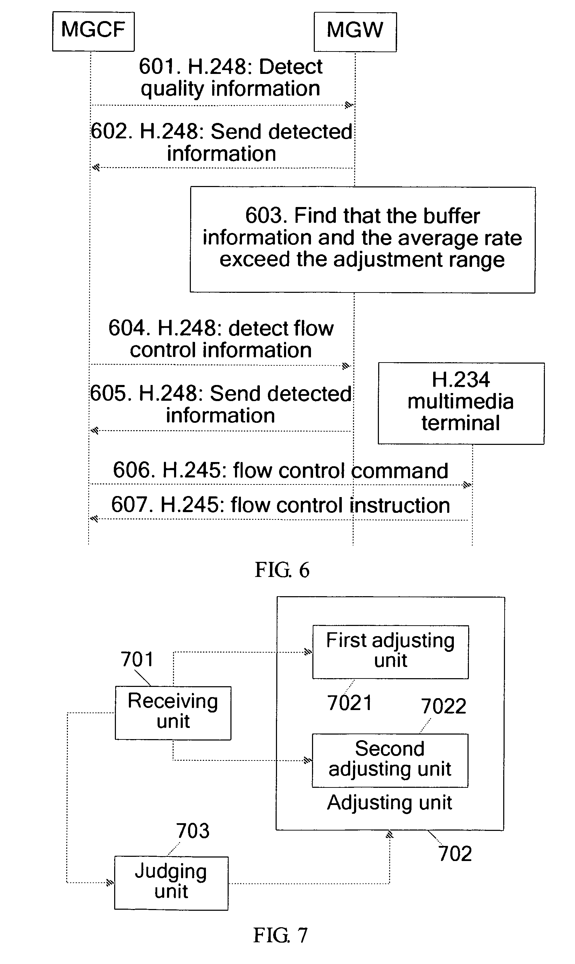

When the quality information indicates that the buffer is lower than the lower threshold or higher than the upper threshold, if the MGW can adjust the buffer by itself, the MGW reduces the transmitting rate or recovers the transmitting rate according to the buffer information. If the MGW is unable to adjust the buffer, the MGW reports the buffer information to the MGCF, the MGCF sends a request to the CS H.324 multimedia telephone terminal, and the CS H.324 multimedia telephone terminal adjusts the bandwidth according to the buffer information, thus adjusting the buffer dynamically. As shown in FIG. 6, the detailed steps are as follows:
601-602: The MGCF instructs the MGW to detect the buffer information and average receiving rate sent by the IMS multimedia telephone terminal.
   Through RTCP, the MTSI terminal sends the detected buffer information and average receiving rate quality information to the MGW (this step is not illustrated in the figure).
603: The MGW detects the buffer information and average rate sent by the MTSI terminal. If the buffer goes beyond the adjustment range of the MGW and the MGW is unable to adjust the buffer, the MGW requests the CS H.324 multimedia telephone terminal to adjust the session quality by means of flow control.
604-605: The MGW reports the requested flow control event to the MGCF through H.248, and indicates the recommended bandwidth value. The recommended bandwidth value may be estimated according to the buffer information and the average receiving bandwidth. For example, when the buffer is about to overflow and the average rate is equal to v, the MGW recommends a rate value less than v; if the buffer is about to underflow, the MGW recommends a rate value higher than v.
606-607: The MGCF sends an H.245 command to the CS H.324 multimedia telephone terminal, instructing the CS H.324 multimedia telephone terminal to modify the bandwidth.

In the four embodiments of the multimedia telephone interworking method herein, the MGW does not necessarily judge whether the MGW itself can adjust the communication quality dynamically according to the quality information, but reports the quality information to the MGCF directly.

It should be noted that when the MTSI terminal interworks with the CS H.324 multimedia telephone terminal, the quality information detected by the MTSI terminal is TMMBR, frame rate level parameter, packet loss ratio, or buffer information, or any combination thereof Therefore, if the quality information includes multiple items of such information, the processes described in the embodiments corresponding to such information may occur simultaneously.

The multimedia telephone interworking method under the present invention enables dynamic adaptation for multimedia interworking according to the quality information sent by the MTSI terminal. In this way, the communication quality in the multimedia telephone interworking is improved.

An MGW is provided in an embodiment of the present invention to improve communication quality in multimedia telephone interworking.

As shown in FIG. 7, the MGW includes:
a receiving unit 701, configured to receive quality information sent from an MTSI terminal; and
an adjusting unit 702, configured to adjust communication quality dynamically according to the quality information.

Through the MGW provided in this embodiment, the receiving unit 701 can receive quality information sent from the MTSI terminal anytime and take actions according to the quality information, and the adjusting unit 702 adjusts the communication quality dynamically according to the quality information. In contrast to the prior art, the quality information occurring or detected on the MTSI terminal can be sent to the adjusting unit 702 completely in time, and the adjusting unit 702 adjusts the communication quality dynamically according to the quality information. In this way, the communication quality in the multimedia telephone interworking is improved.

The adjusting unit 702 further includes:
a first adjusting unit 7021, configured to let the MGW itself adjust communication quality; and
a second adjusting unit 7022, configured to report the quality information to the MGCF for the purpose of dynamic adjustment.

After the receiving unit 701 receives the quality information sent from the MTSI terminal, the MGW may adjust the communication quality by itself, or report the quality information to the MGCF for the purpose of dynamic adjustment.

In order to decide whether the first adjusting unit 7021 or the second adjusting unit 7022 performs the adjustment, the MGW may further include:
a judging unit 703, configured to: judge whether the MGW is able to adjust the communication quality dynamically by itself according to the quality information; if the MGW is unable to adjust the communication quality dynamically by itself, instruct the second adjusting unit 7022 to report the quality information to the MGCF for dynamic adjustment.

The quality information is: TMMBR, request for balancing frame rate and image resolution, packet loss ratio, and buffer information.

Therefore, the MGW provided in this embodiment enables dynamic adjustment of the communication quality in the multimedia interworking according to the quality information sent by the MTSI terminal. In this way, the communication quality in the multimedia telephone interworking is improved.

An MGCF is provided in an embodiment of the present invention to improve communication quality in multimedia telephone interworking.

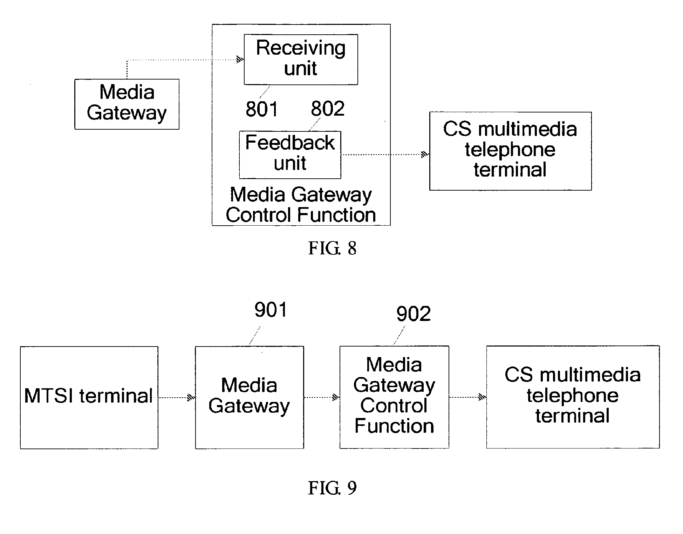

As shown in FIG. 8, the MGCF includes:
a receiving unit 801, configured to receive quality information reported by the MGW; and
a feedback unit 802, configured to send the quality information to a CS multimedia telephone terminal for dynamic adjustment.

Through the MGCF provided in this embodiment, when the MGW is unable to adjust the communication quality dynamically according to the quality information sent from the MTSI terminal, the MGW reports the quality information to the MGCF. After the receiving unit 801 receives the quality information reported by the MGW, the feedback unit 802 sends the quality information to the CS multimedia telephone terminal for the purpose of dynamic adjustment. Compared with the prior art, the MGCF provided in this embodiment receives the quality information sent from the MGW anytime, and adjusts the communication quality dynamically. In this way, the communication quality in the multimedia telephone interworking is improved.

A multimedia telephone interworking system is provided in an embodiment of the present invention to improve communication quality in multimedia telephone interworking.

As shown in FIG. 9, the system includes:
an MGW 901, configured to: receive quality information sent from an MTSI terminal, and adjust communication quality dynamically according to the quality information; and
an MGCF 902, configured to: receive the quality information reported by the MGW 901, and send the quality information to a CS multimedia telephone terminal for dynamic adjustment.

Through the multimedia telephone interworking system provided in this embodiment, the MGW can receive the quality information sent from the MTSI terminal any time, and take actions according to the quality information to adjust the communication quality dynamically; or the quality information is reported to the MGCF, and the MGCF sends the quality information to the CS multimedia telephone terminal for the purpose of dynamic adjustment. In contrast to the prior art, the quality information occurring or detected on the MTSI terminal can be sent to the MGW completely in time, and the MGW adjust the communication quality dynamically according to the quality information. In this way, the communication quality in the multimedia telephone interworking is improved.

The above descriptions are merely exemplary embodiments of the present invention, but not intended to limit the present invention.

## Claims

1. A multimedia telephone interworking method applied in a scenario of interworking between Multimedia Telephony Service over IMS, MTSI, and Circuit Switched, CS, multimedia telephony service, comprising:
receiving (S1), by a Media Gateway, MGW, quality information sent from an MTSI terminal; and
adjusting (S2), by the MGW, communication quality dynamically according to the quality information;
**characterized in that**
the quality information comprises at least one of the following: Temporary Maximum Media Bandwidth Request, TMMBR, request for balancing frame rate and image resolution, packet loss ratio, or buffer information.

2. The multimedia telephone interworking method according to claim 1, wherein: the step of adjusting, by the MGW, the communication quality dynamically according to the quality information comprises:
adjusting, by the MGW, the communication quality dynamically by itself; or
reporting, by the MGW, the quality information to a Media Gateway Control Function, MGCF, for dynamic adjustment.

3. The multimedia telephone interworking method according to claim 2, wherein: if the quality information is TMMBR, the step of adjusting, by the MGW, the communication quality dynamically by itself comprises:
adjusting, by the MGW, transmitting rate of video according to the TMMBR.

4. The multimedia telephone interworking method according to claim 2, wherein: if the quality information is TMMBR, the step of reporting, by the MGW, the quality information to the MGCF for dynamic adjustment comprises:
reporting, by the MGW, maximum bandwidth information to the MGCF; and
sending, by the MGCF the maximum bandwidth information to a CS multimedia telephone terminal, and adjusting, by the CS multimedia telephone terminal, video codes dynamically according to the maximum bandwidth information.

5. The multimedia telephone interworking method according to claim 2, wherein: if the quality information is the request for balancing frame rate and image resolution, the step of adjusting, by the MGW, the communication quality dynamically by itself comprises:
adjusting, by the MGW, the frame rate and the image resolution to a requested balance state according to the request for balancing frame rate and image resolution.

6. The multimedia telephone interworking method according to claim 2, wherein: if the quality information is the request for balancing frame rate and image resolution, the step of reporting, by the MGW, the quality information to the MGCF for dynamic adjustment comprises:
reporting, by the MGW, the request for balancing frame rate and image resolution to the MGCF; and
sending, by the MGCF, the request for balancing frame rate and image resolution to a CS multimedia telephone terminal, and adjusting, by the CS multimedia telephone terminal, the frame rate and the image resolution to a requested balance state according to the request for balancing frame rate and image resolution.

7. The multimedia telephone interworking method according to claim 2, wherein: if the quality information is the packet loss ratio, the step of adjusting, by the MGW, the communication quality dynamically by itself comprises:
converting, by the MGW, the packet loss ratio into bandwidth information, and modifying code rate of video according to the bandwidth information.

8. The multimedia telephone interworking method according to claim 2, wherein: if the quality information is the packet loss ratio, the step of reporting, by the MGW, the quality information to the MGCF for dynamic adjustment comprises:
converting, by the MGW, the packet loss ratio into bandwidth information and reporting the bandwidth information to the MGCF; and
sending, by the MGCF, the bandwidth information to a CS multimedia telephone terminal, and modifying, by the CS multimedia telephone terminal, code rate of video according to the bandwidth information.

9. The multimedia telephone interworking method according to claim 2, wherein: if the quality information is the buffer information, the step of adjusting, by the MGW, the communication quality dynamically by itself comprises:
reducing or recovering, by the MGW, transmitting rate according to the buffer information.

10. The multimedia telephone interworking method according to claim 2, wherein: if the quality information is the buffer information, the step of reporting, by the MGW, the quality information to the MGCF for dynamic adjustment comprises:
reporting, by the MGW, the buffer information to the MGCF; and
sending, by the MGCF, the buffer information to a CS multimedia telephone terminal, and reducing or recovering, by the CS multimedia telephone terminal, transmitting rate according to the buffer information.

11. The multimedia telephone interworking method according to any one of claims 2-10, wherein: before the MGW reports the quality information to the MGCF for dynamic adjustment, the method further comprises:
judging, by the MGW, whether the MGW is able to adjust the communication quality dynamically by itself according to the quality information; if the MGW is unable to adjust the communication quality dynamically by itself, reporting the quality information to the MGCF for dynamic adjustment.

12. A Media Gateway, MGW, comprising:
a receiving unit (701), configured to receive quality information sent from a Multimedia Telephony Service over IMS, MTSI, terminal; and
an adjusting unit (702), configured to adjust communication quality dynamically according to the quality information;
**characterized in that**
the quality information comprises at least one of the following: Temporary Maximum Media Bandwidth Request, TMMBR, request for balancing frame rate and image resolution, packet loss ratio, or buffer information.

13. The MGW according to claim 12, wherein the adjusting unit comprises:
a first adjusting unit (7021), configured to make the MGW itself adjust the communication quality; and
a second adjusting unit (7022), configured to report the quality information to a Media Gateway Control Function, MGCF, for dynamic adjustment.

14. The MGW according to claim 13, wherein the MGW further comprises:
a judging unit (703), configured to: judge whether the MGW is able to adjust the communication quality dynamically by itself according to the quality information; if the MGW is unable to adjust the communication quality dynamically by itself, instruct the second adjusting unit (7022) to report the quality information to the MGCF for dynamic adjustment.

15. A multimedia telephone interworking system, comprising:
a Media Gateway, MGW (901), configured to: receive quality information sent from a Multimedia Telephony Service over IMS, MTSI, terminal, and adjust communication quality dynamically according to the quality information; and
a Media Gateway Control Function, MGCF (902), configured to: receive the quality information reported by the MGW (901), and send the quality information to a Circuit Switched, CS, multimedia telephone terminal for dynamic adjustment;
**characterized in that**
the quality information comprises at least one of the following: Temporary Maximum Media Bandwidth Request, TMMBR, request for balancing frame rate and image resolution, packet loss ratio, or buffer information.

## Patentansprüche

1. Multimedia-Telefon-Interworking-Verfahren, das in einem Szenario des Interworking zwischen Multimedia Telephony Service over IMS, MTSI, und leitungsvermitteltem bzw. CS-Multimedia-Telefoniedienst angewandt wird, umfassend:
ein Media Gateway MGW empfängt (S1) von einem MTSI-Endgerät gesendete Qualitätsinformationen; und
das MGW justiert (S2) die Kommunikationsqualität dynamisch gemäß den Qualitätsinformationen;
**dadurch gekennzeichnet, dass**
die Qualitätsinformationen mindestens eine der folgenden Alternativen umfassen: eine Anforderung der Temporary Maximum Media Bandwidth Request TMMBR zum Ausgleichen von Vollbildrate und Bildauflösung, Paketverlustverhältnis oder Pufferinformationen.

2. Multimedia-Telefon-Interworking-Verfahren nach Anspruch 1, wobei der Schritt des dynamischen Justierens der Kommunikationsqualität durch das MGW gemäß den Qualitätsinformationen Folgendes umfasst:
das MGW justiert die Kommunikationsqualität dynamisch selbst; oder
das MGW meldet die Qualitätsinformationen an eine Media Gateway Control Function MGCF zur dynamischen Justierung.

3. Multimedia-Telefon-Interworking-Verfahren nach Anspruch 2, wobei, wenn die Qualitätsinformationen TMMBR sind, der Schritt des dynamischen Justierens der Kommunikationsqualität durch das MGW selbst Folgendes umfasst:
das MGW justiert die Übertragungsrate von Video gemäß der TMMBR.

4. Multimedia-Telefon-Interworking-Verfahren nach Anspruch 2, wobei, wenn die Qualitätsinformationen TMMBR sind, der Schritt des Meldens der Qualitätsinformationen durch das MGW an die MGCF zur dynamischen Justierung Folgendes umfasst:
das MGW meldet Maximalbandbreiteninformationen an die MGCF; und
die MGCF sendet die Maximalbandbreiteninformationen zu einem CS-Multimedia-Telefonendgerät und das CS-Multimedia-Telefonendgerät justiert Videocodes dynamisch gemäß den Maximalbandbreiteninformationen.

5. Multimedia-Telefon-Interworking-Verfahren nach Anspruch 2, wobei, wenn die Qualitätsinformationen die Anforderung zum Ausgleichen von Vollbildrate und Bildauflösung sind, der Schritt des dynamischen Justierens der Kommunikationsqualität durch das MGW selbst Folgendes umfasst:
das MGW justiert die Vollbildrate und die Bildauflösung auf einen angeforderten Ausgleichszustand gemäß der Anforderung zum Ausgleichen von Vollbildrate und Bildauflösung.

6. Multimedia-Telefon-Interworking-Verfahren nach Anspruch 2, wobei, wenn die Qualitätsinformationen die Anforderung zum Ausgleichen von Vollbildrate und Bildauflösung sind, der Schritt des Meldens der Qualitätsinformationen durch das MGW an die MGCF zur dynamischen Justierung Folgendes umfasst:
das MGW meldet die Anforderung zum Ausgleichen von Vollbildrate und Bildauflösung an die MGCF; und
die MGCF sendet die Anforderung zum Ausgleichen von Vollbildrate und Bildauflösung zu einem CS-Multimedia-Telefonendgerät und das CS-Multimedia-Telefonendgerät justiert die Vollbildrate und die Bildauflösung auf einen angeforderten Ausgleichszustand gemäß der Anforderung zum Ausgleichen von Vollbildrate und Bildauflösung.

7. Multimedia-Telefon-Interworking-Verfahren nach Anspruch 2, wobei, wenn die Qualitätsinformationen das Paketverlustverhältnis sind, der Schritt des dynamischen Justierens der Kommunikationsqualität durch das MGW selbst Folgendes umfasst:
das MGW setzt das Paketverlustverhältnis in Bandbreiteninformationen um und die Coderate von Video wird gemäß den Bandbreiteninformationen modifiziert.

8. Multimedia-Telefon-Interworking-Verfahren nach Anspruch 2, wobei, wenn die Qualitätsinformationen das Paketverlustverhältnis sind, der Schritt des Meldens der Qualitätsinformationen durch das MGW an die MGCF zur dynamischen Justierung Folgendes umfasst:
das MGW setzt das Paketverlustverhältnis in Bandbreiteninformationen um und die Bandbreiteninformationen werden an die MGCF gemeldet; und
die MGCF sendet die Bandbreiteninformationen zu einem CS-Multimedia-Telefonendgerät und das CS-Multimedia-Telefonendgerät modifiziert die Coderate von Video gemäß den Bandbreiteninformationen.

9. Multimedia-Telefon-Interworking-Verfahren nach Anspruch 2, wobei, wenn die Qualitätsinformationen die Pufferinformationen sind, der Schritt des dynamischen Justierens der Kommunikationsqualität durch das MGW selbst Folgendes umfasst:
das MGW verringert oder regeneriert die Übertragungsrate gemäß den Pufferinformationen.

10. Multimedia-Telefon-Interworking-Verfahren nach Anspruch 2, wobei, wenn die Qualitätsinformationen die Pufferinformationen sind, der Schritt des Meldens der Qualitätsinformationen durch das MGW an die MGCF zur dynamischen Justierung Folgendes umfasst:
das MGW meldet die Pufferinformationen an die MGCF; und
die MGCF sendet die Pufferinformationen zu einem CS-Multimedia-Telefonendgerät und das CS-Multimedia-Telefonendgerät verringert oder regeneriert die Übertragungsrate gemäß den Pufferinformationen.

11. Multimedia-Telefon-Interworking-Verfahren nach einem der Ansprüche 2-10, wobei das Verfahren, bevor das MGW die Qualitätsinformationen an die MGCF zur dynamischen Justierung meldet, ferner Folgendes umfasst:
das MGW beurteilt, ob das MGW in der Lage ist, die Kommunikationsqualität dynamisch selbst zu justieren, gemäß den Qualitätsinformationen; wenn das MGW nicht in der Lage ist, die Kommunikationsqualität dynamisch selbst zu justieren, werden die Qualitätsinformationen an die MGCF zur dynamischen Justierung gemeldet.

12. Media Gateway MGW, umfassend:
eine Empfangseinheit (701), die dafür ausgelegt ist, von einem Endgerät des Multimedia Telephony Service over IMS, MTSI, gesendete Qualitätsinformationen zu empfangen; und
eine Justiereinheit (702), die dafür ausgelegt ist, die Kommunikationsqualität dynamisch gemäß den Qualitätsinformationen zu justieren;
**dadurch gekennzeichnet, dass**
die Qualitätsinformationen mindestens eine der folgenden Alternativen umfassen: eine Anforderung der Temporary Maximum Media Bandwidth Request TMMBR zum Ausgleichen von Vollbildrate und Bildauflösung, Paketverlustverhältnis oder Pufferinformationen.

13. MGW nach Anspruch 12, wobei die Justiereinheit Folgendes umfasst:
eine erste Justiereinheit (7021), die dafür ausgelegt ist, zu bewirken, dass das MGW selbst die Kommunikationsqualität justiert; und
eine zweite Justiereinheit (7022), die dafür ausgelegt ist, die Qualitätsinformationen an eine Media Gateway Control Function MGCF zur dynamischen Justierung zu melden.

14. MGW nach Anspruch 13, wobei das MGW ferner Folgendes umfasst:
eine Beurteilungseinheit (703), die für Folgendes ausgelegt ist: Beurteilen, ob das MGW in der Lage ist, die Kommunikationsqualität dynamisch selbst zu justieren, gemäß den Qualitätsinformationen; wenn das MGW nicht in der Lage ist, die Kommunikationsqualität dynamisch selbst zu justieren, wird die zweite Justiereinheit (7022) angewiesen, die Qualitätsinformationen an die MGCF zur dynamischen Justierung zu melden.

15. Multimedia-Telefon-Interworking-System, umfassend:
ein Media Gateway MGW (901), das für Folgendes ausgelegt ist: Empfangen von Qualitätsinformationen, die von einem Endgerät des Multimedia Telephony Service over IMS, MTSI, gesendet werden, und Justieren der Kommunikationsqualität dynamisch gemäß den Qualitätsinformationen; und
eine Media Gateway Control Function MGCF (902), die für Folgendes ausgelegt ist: Empfangen der durch das MGW (901) gemeldeten Qualitätsinformationen und Senden der Qualitätsinformationen zu einem leitungsvermittelten bzw. CS-Multimedia-Telefonendgerät zur dynamischen Justierung;
**dadurch gekennzeichnet, dass**
die Qualitätsinformationen mindestens eine der folgenden Alternativen umfassen: eine Anforderung der Temporary Maximum Media Bandwidth Request TMMBR zum Ausgleichen von Vollbildrate und Bildauflösung, Paketverlustverhältnis oder Pufferinformationen.

## Revendications

1. Procédé d'interfonctionnement téléphonique multimédia appliqué dans un scénario d'interfonctionnement entre un Service de Téléphonie Multimédia sur IMS, ou MTSI, et un service de téléphonie multimédia à Commutation de Circuits, CS, comprenant :
la réception (S1), par une Passerelle Multimédia, MGW, d'une information de qualité envoyée depuis un terminal MTSI ; et
le réglage dynamique (S2), par la MGW, d'une qualité de communication en fonction de l'information de qualité ;
**caractérisé en ce que**
l'information de qualité comprend au moins l'une des informations suivantes : Requête de Largeur de Bande Multimédia Maximum Temporaire, ou TMMBR, requête d'équilibrage de fréquence d'images et de résolution d'image, rapport de perte de paquets ou information de mémoire tampon.

2. Procédé d'interfonctionnement téléphonique multimédia selon la revendication 1, dans lequel : l'étape de réglage dynamique, par la MGW, de la qualité de communication en fonction de l'information de qualité comprend :
le réglage dynamique, par la MGW elle-même, de la qualité de communication ; ou
le signalement, par la MGW, de l'information de qualité à une Fonction de Commande de Passerelle Multimédia, MGCF, en vue d'un réglage dynamique.

3. Procédé d'interfonctionnement téléphonique multimédia selon la revendication 2, dans lequel : si l'information de qualité est une TMMBR, l'étape de réglage dynamique, par la MGW elle-même, de la qualité de communication comprend :
le réglage, par la MGW, du débit de transmission vidéo en fonction de la TMMBR.

4. Procédé d'interfonctionnement téléphonique multimédia selon la revendication 2, dans lequel : si l'information de qualité est une TMMBR, l'étape de signalement, par la MGW, de l'information de qualité à la MGCF en vue d'un réglage dynamique comprend :
le signalement, par la MGW, d'une information de largeur de bande maximum à la MGCF; et
l'envoi, par la MGCF, de l'information de largeur de bande maximum à un terminal téléphonique multimédia CS, et le réglage dynamique, par le terminal téléphonique multimédia CS, de codes vidéo en fonction de l'information de largeur de bande maximum.

5. Procédé d'interfonctionnement téléphonique multimédia selon la revendication 2, dans lequel : si l'information de qualité est une requête d'équilibrage de fréquence d'images et de résolution d'image, l'étape de réglage dynamique, par la MGW elle-même, de la qualité de communication comprend :
le réglage, par la MGW, de la fréquence d'images et de la résolution d'image sur un état d'équilibre requis en fonction de la requête d'équilibrage de fréquence d'images et de résolution d'image.

6. Procédé d'interfonctionnement téléphonique multimédia selon la revendication 2, dans lequel : si l'information de qualité est une requête d'équilibrage de fréquence d'images et de résolution d'image, l'étape de signalement, par la MGW, de l'information de qualité à la MGCF en vue d'un réglage dynamique comprend :
le signalement, par la MGW, de la requête d'équilibrage de fréquence d'images et de résolution d'image à la MGCF ; et
l'envoi, par la MGCF, de la requête d'équilibrage de fréquence d'images et de résolution d'image à un terminal téléphonique multimédia CS, et le réglage, par le terminal téléphonique multimédia CS, de la fréquence d'images et de la résolution d'image sur un état d'équilibre requis en fonction de la requête d'équilibrage de fréquence d'images et de résolution d'image.

7. Procédé d'interfonctionnement téléphonique multimédia selon la revendication 2, dans lequel : si l'information de qualité est le rapport de perte de paquets, l'étape de réglage dynamique, par la MGW elle-même, de la qualité de communication comprend :
la conversion, par la MGW, du rapport de perte de paquets en une information de largeur de bande, et la modification du taux de codage vidéo en fonction de l'information de largeur de bande.

8. Procédé d'interfonctionnement téléphonique multimédia selon la revendication 2, dans lequel : si l'information de qualité est le rapport de perte de paquets, l'étape de signalement, par la MGW, de l'information de qualité à la MGCF en vue d'un réglage dynamique comprend :
la conversion, par la MGW, du rapport de perte de paquets en une information de largeur de bande et le signalement de l'information de largeur de bande à la MGCF ; et
l'envoi, par la MGCF, de l'information de largeur de bande à un terminal téléphonique multimédia CS, et la modification, par le terminal téléphonique multimédia CS, du taux de codage vidéo en fonction de l'information de largeur de bande.

9. Procédé d'interfonctionnement téléphonique multimédia selon la revendication 2, dans lequel : si l'information de qualité est l'information de mémoire tampon, l'étape de réglage dynamique, par la MGW elle-même, de la qualité de communication comprend :
la réduction ou la récupération, par la MGW, du débit de transmission en fonction de l'information de mémoire tampon.

10. Procédé d'interfonctionnement téléphonique multimédia selon la revendication 2, dans lequel : si l'information de qualité est l'information de mémoire tampon, l'étape de signalement, par la MGW, de l'information de qualité à la MGCF en vue d'un réglage dynamique comprend :
le signalement, par la MGW, de l'information de mémoire tampon à la MGCF ; et
l'envoi, par la MGCF, de l'information de mémoire tampon à un terminal téléphonique multimédia CS, et la réduction ou la récupération, par le terminal téléphonique multimédia CS, du débit d'émission en fonction de l'information de mémoire tampon.

11. Procédé d'interfonctionnement téléphonique multimédia selon l'une quelconque des revendications 2 à 10, comprenant en outre, avant le signalement par la MGW de l'information de qualité à la MGCF en vue d'un réglage dynamique :
le jugement, par la MGW, que la MGW est en mesure ou non de régler elle-même dynamiquement la qualité de communication en fonction de l'information de qualité ;
si la MGW n'est pas en mesure de régler elle-même dynamiquement la qualité de communication, le signalement de l'information de qualité à la MGCF en vue d'un réglage dynamique.

12. Passerelle multimédia, MGW, comprenant :
une unité de réception (701), configurée pour recevoir une information de qualité envoyée par un terminal de Service de Téléphonie Multimédia sur IMS, ou MTSI ; et
une unité de réglage (702), configurée pour régler dynamiquement la qualité de communication en fonction de l'information de qualité ;
**caractérisée en ce que**
l'information de qualité comprend au moins l'une des informations suivantes : Requête de Largeur de Bande Multimédia Maximum Temporaire, ou TMMBR, requête d'équilibrage de fréquence d'images et de résolution d'image, rapport de perte de paquets ou information de mémoire tampon.

13. MGW selon la revendication 12, dans laquelle l'unité de réglage comprend :
une première unité de réglage (7021), configurée pour faire en sorte que la MGW règle elle-même la qualité de communication ; et
une seconde unité de réglage (7022), configurée pour signaler l'information de qualité à une Fonction de Commande de Passerelle Multimédia, MGCF, en vue d'un réglage dynamique.

14. MGW selon la revendication 13, la MGW comprenant en outre :
une unité de jugement (703), configurée pour : juger que la MGW est en mesure ou non de régler elle-même dynamiquement la qualité de communication en fonction de l'information de qualité ; si la MGW n'est pas en mesure de régler elle-même la qualité de communication, donner 1' ordre à la seconde unité de réglage (7022) de signaler l'information de qualité à la MGCF en vue d'un réglage dynamique.

15. Système d'interfonctionnement téléphonique multimédia comprenant :
une Passerelle Multimédia, MGW (901), configurée pour : recevoir une information de qualité envoyée par un terminal de Service de Téléphonie Multimédia sur IMS, ou MTSI, et régler la qualité de communication dynamiquement en fonction de l'information de qualité ; et
une Fonction de Commande de Passerelle Multimédia, MGCF (902), configurée pour recevoir l'information de qualité signalée par la MGW (901), et envoyer l'information de qualité à un terminal téléphonique multimédia à Commutation de Circuits, CS, en vue d'un réglage dynamique ;
**caractérisé en ce que**
l'information de qualité comprend au moins l'une des informations suivantes : Requête de Largeur de Bande Multimédia Maximum Temporaire, ou TMMBR, requête d'équilibrage de fréquence d'images et de résolution d'image, rapport de perte de paquets ou information de mémoire tampon.
